# DEMANDE DE BREVET EUROPEEN

(11) **EP 2 392 848 A1**
(43) Date de publication de la demande: **07.12.2011**
(21) Numéro de dépôt: 11169013.7
(22) Date de dépôt: 07.06.2011
(51) Int. Cl.: F16L 59/00

(54) **Matériau isolant thermiquement**

(30) Priorité: 07.06.2010 FR 1054457
(71) Demandeur: Cavac Biomateriaux, 85000 La Roche sur Yon (FR)
(72) Inventeur: Joreau, Olivier, 85340 OLONNE SUR MER (FR)
(74) Mandataire: Sartorius, Jérome

(57) **Abrégé**

La présente invention concerne un matériau isolant thermiquement et acoustiquement comprenant, en pourcentages en masse par rapport à la masse totale dudit matériau, entre 5 et 80 % de fibres de lin et entre 5 et 80 % de fibres de chanvre. L'invention se rapporte également à l'utilisation d'un tel matériau à des fins d'isolation thermique et/ou acoustique.

## Description

### Domaine technique

La présente invention se rapporte à un matériau isolant thermiquement et acoustiquement et à un procédé de fabrication d'un tel matériau.

### Etat de la technique

Devant les obstacles environnementaux liés à l'utilisation des laines minérales classiques, des matériaux isolants à base de matières premières d'origine naturelle ont été développés.

On connaît par exemple de DE 195 16 186 un matériau isolant comprenant entre 37 et 52 % de particules d'un matériau cellulosique présentant une taille inférieure à 5 mm, entre 16 et 30 % de fibres naturelles de longueur comprise entre 5 et 30 mm, et entre 18 et 47 % d'un agent liant.

Les performances de ces matériaux, notamment en termes de résistance à l'humidité, de résistance thermique et de longévité doivent être sans cesse améliorées.

Un objectif de la présente invention est de fournir un matériau isolant répondant, au moins partiellement, à ces besoins.

### Résumé de l'invention

A cet effet, l'invention propose un matériau isolant thermiquement et acoustiquement comprenant, en pourcentages en masse par rapport à la masse totale dudit matériau, entre 5 et 80 % de fibres de lin et entre 5 et 80 % de fibres de chanvre.

Un tel matériau procure une isolation naturelle et performante. Contre toute attente, les inventeurs ont également découvert que l'association des fibres de lin et de chanvre est particulièrement efficace pour réguler l'hygrométrie : ainsi, un matériau selon l'invention est-il capable d'absorber une partie de l'humidité ambiante et de la restituer quand l'atmosphère est trop sèche.

De préférence, les fibres de lin sont issues d'une ou plusieurs des variétés suivantes de lin : Everest® et Banquise®.

De préférence, les fibres de lin sont présentes dans ledit matériau selon l'invention en une teneur comprise entre 10 et 80 %, entre 20 et 60 %, entre 30 et 50 %, de préférence encore entre 40 et 45 %, en pourcentages en masse par rapport à la masse totale dudit matériau.

De préférence, les fibres de chanvre sont issues d'une ou plusieurs des variétés suivantes de chanvre : Futura 75®, Epsilon 68®, Santhica 27®, Fédora 17 BIO®, Uso 31 BIO®.

De préférence, les fibres de chanvre sont présentes en une teneur comprise entre 10 et 80 %, entre 20 et 60 %, entre 30 et 50 %, de préférence encore entre 40 et 45 %, en pourcentages en masse par rapport à la masse totale dudit matériau.

Un matériau selon l'invention peut en outre comprendre plus de 3%, de préférence plus de 5 % et/ou moins de 25 %, moins de 20 %, moins de 15 %, de préférence moins de 10 % de chènevottes du lin et/ou du chanvre, en pourcentages en masse par rapport à la masse totale dudit matériau.

Selon un mode de réalisation particulier, un matériau selon l'invention comprend, en pourcentages en masse par rapport à la masse totale dudit matériau,
- plus de 30 %, de préférence plus de 40 % et/ou moins de 60 %, de préférence moins de 45 % de fibres de lin et
- plus de 30 %, de préférence plus de 40 % et/ou moins de 45 % de fibres de chanvre.

Les fibres de lin présentent une taille moyenne de préférence supérieure à 25 mm, de préférence supérieure à 30 mm et/ou inférieure à 100 mm, inférieure à 80 mm, de préférence inférieure à 60 mm.

Les fibres de chanvre présentent une taille moyenne de préférence supérieure à 25 mm, de préférence supérieure à 30 mm et/ou inférieure à 100 mm, inférieure à 80 mm, de préférence inférieure à 60 mm.

L'utilisation de fibres présentant une taille moyenne élevée permet avantageusement un enchevêtrement entre les fibres contribuant au maintien du matériau. La teneur en agent liant peut alors être limitée.

Un matériau selon l'invention peut en outre comprendre un agent liant, de préférence choisi parmi des fibres de liage, une poudre thermoplastique, une résine et leurs mélanges. De préférence, l'agent liant présente une température de fusion inférieure à 200°C et/ou supérieure à 100°C.

Comme fibres de liage convenant tout particulièrement à l'invention, on peut notamment citer les fibres de polyester bicomposant, en polyéthylène, en polypropylène, les fibres thermoliantes à base d'amidon de végétaux, et leurs mélanges.

Lorsqu'un matériau conforme à l'invention comprend un agent liant, ce dernier peut être présent en une teneur supérieure à 2 %, de préférence supérieure à 10%, voire supérieure à 15 %, et/ou inférieure à 50 %, de préférence inférieure à 40 %, inférieure à 30 %, inférieure à 20 %, voire inférieure à 15 % en pourcentages en masse par rapport à la masse totale dudit matériau.

L'utilisation de fibres présentant une taille moyenne élevée permet également de fabriquer un matériau pouvant présenter une grande variété de densité. En particulier, le matériau selon l'invention peut présenter une densité supérieure à 10 kg/m³, de préférence supérieure à 20 kg/m³, de préférence supérieure à 30 kg/m³, et/ou inférieure à 120 kg/m³, de préférence inférieure à 60 kg/m³, et notamment inférieure à 40 kg/m³. Il est ainsi possible d'utiliser un matériau selon l'invention dans des applications dans lesquelles les propriétés d'isolation thermique recherchées sont très diverses.

Les inventeurs ont également observé, de manière surprenante, qu'il est avantageux, pour améliorer les performances acoustiques, de réduire l'écart type des tailles des fibres utilisées. De préférence, plus de 80 %, de préférence plus de 90%, en nombre des fibres de lin et/ou de chanvre présentent une taille comprise dans une plage d'une largeur inférieure à 10 mm, inférieure à 8 mm, inférieure à 5 mm, inférieure à 4 mm, inférieure à 3 mm, inférieure à 2 mm. De préférence, en particulier lorsque l'écart-type des tailles des fibres est réduit, la taille moyenne des fibres de lin et/ou de chanvre est inférieure à 50 mm, inférieure à 40 mm, inférieure à 35 mm, voire inférieure à 32 mm.

De préférence, les fibres de lin et de chanvre représentent ensemble plus de 80 %, plus de 90 %, voire plus de 95 %, de la masse totale du matériau. De préférence, les fibres de lin, les fibres de chanvre, l'agent liant optionnel, et les chènevottes optionnelles représentent ensemble plus de 90 %, voire plus de 95 % de la masse totale du matériau.

Un matériau selon l'invention peut prendre différentes formes, et peut notamment se présenter sous la forme d'une couche, en particulier une couche souple apte à être enroulée, dite « couche enroulable », ou plus rigide, sous la forme d'un panneau.

Une couche enroulable selon l'invention présente une épaisseur avant enroulement de préférence supérieure à 15 mm, supérieure à 20 mm, supérieure à 30 mm, de préférence supérieure à 40 mm, voire supérieure à 45 mm et/ou, de préférence, inférieure à 500 mm, inférieure à 400 mm, inférieure à 300 mm, inférieure à 250 mm, voire inférieure à 200 mm.

Une couche enroulable selon l'invention présente une longueur de préférence supérieure à 1 m, supérieure à 2 m, supérieure à 3 m, voire supérieure à 4 m et/ou, de préférence, inférieure à 15 m, inférieure à 12 m, inférieure à 10 m, voire inférieure à 9 m.

Une couche enroulable selon l'invention présente une largeur de préférence supérieure à 0,30 m, supérieure à 0,45 m, supérieure à 0,55 m et/ou, de préférence, inférieure à 1 m, inférieure à 0,90 m, inférieure à 0,75 m, voire inférieure à 0,65 m.

De préférence, une couche enroulable selon l'invention présente encore une densité supérieure à 10 kg/m³, de préférence supérieure à 20 kg/m³, de préférence supérieure à 30 kg/m³, et/ou inférieure à 120 kg/m³, de préférence inférieure à 60 kg/m³ et notamment inférieure à 40 kg/m³.

Un panneau selon l'invention présente une épaisseur de préférence supérieure à 50 mm, supérieure à 70 mm, supérieure à 100 mm et/ou, de préférence, inférieure à 600 mm, inférieure à 400 mm, inférieure à 300 mm, inférieure à 200 mm.

Un panneau selon l'invention présente une longueur de préférence supérieure à 0,70 m, supérieure à 0,90 m, supérieure à 1,10 m, supérieure à 1,20 m et/ou, de préférence, inférieure à 3 m, inférieure à 2 m, inférieure à 1,50 m, inférieure à 1,30 m.

Un panneau selon l'invention présente une largeur de préférence supérieure à 0,30 m, supérieure à 0,45 m, supérieure à 0,55 m et/ou, de préférence, inférieure à 1 m, inférieure à 0,90 m, inférieure à 0,75 m, voire inférieure à 0,65 m.

Un panneau selon l'invention une densité de préférence supérieure à 10 kg/m³, de préférence supérieure à 20 kg/m³, de préférence supérieure à 30 kg/m³ et inférieure à 120 kg/m³, de préférence inférieure à 60kg/m³, et notamment inférieure à 40 kg/m³.

L'invention concerne également un article comportant un matériau selon l'invention, en particulier sous la forme d'une couche dudit matériau fixée à une plaque rigide.

Selon un mode de réalisation particulier, un article selon l'invention se présente sous la forme d'un ou d'un panneau en un matériau selon l'invention présentant une grande face, voire deux grandes faces, revêtue(s), au moins partiellement, d'un film, de préférence un film étanche à la vapeur d'eau.

Ledit film peut être avantageusement choisi parmi un film composite, de préférence souple, par exemple un film en papier kraft-aluminium, un film non-tissé, un frein vapeur, un film plastique. De préférence, ledit film est en papier kraft-aluminium.

Selon un autre mode de réalisation particulier, ledit matériau selon l'invention est lié, notamment au niveau d'au moins une de ses grandes faces, par exemple par collage, soudage à chaud, ultra-sons, couture ou toute autre méthode adaptée, à au moins une plaque rigide.

La plaque rigide peut être choisie parmi des plaques de plâtre, de gypse, de bois, de bois composite, ou de panneaux de particules. Ces matériaux permettent de fabriquer des panneaux de contreventement, de finition, de protection contre les diverses projections, de résistance au feu.

Un article selon l'invention peut se présenter sous la forme d'une superposition de couches, au moins une des couches étant en un matériau isolant conforme à l'invention et au moins une des couches étant en ledit matériau complémentaire.

Un tel article peut en outre présenter une grande face, voire deux grandes faces, revêtue(s), au moins partiellement, d'un film tel que défini précédemment.

L'invention concerne aussi un équipement choisi parmi un bâtiment, un véhicule automobile, et une construction aéronautique ou navale, ledit équipement comportant un matériau, voire un article selon l'invention, en particulier pour assurer une isolation thermique et/ou acoustique.

De manière générale, l'invention concerne l'utilisation d'un matériau selon l'invention pour l'isolation thermique et/ou acoustique.

L'invention concerne également un procédé de fabrication d'un matériau selon l'invention, ledit procédé comprenant les étapes successives suivantes :
a) approvisionnement en paille de lin et en paille de chanvre ;
b) défibrage de la paille de lin et de la paille de chanvre de manière à extraire respectivement des fibres de lin et des fibres de chanvre ;
c) nappage desdites fibres de lin avec lesdites fibres de chanvre de manière à obtenir un « nappé » ;
d) optionnellement, liage des fibres du nappé ;
e) optionnellement, application d'un film sur le nappé, éventuellement après liage ;
f) assemblage, en particulier par collage, soudage à chaud, ultra-sons, ou couture, du nappé à au moins une plaque rigide.

### Définitions

On appelle « fibre » une substance filamenteuse présentant une longueur (ou « taille ») plus de 10 fois supérieure à sa plus grande dimension dans un plan transversal quelconque, les plans transversaux étant les plans coupant la fibre perpendiculairement à la direction de sa longueur.

La taille moyenne d'un ensemble de fibres est la moyenne arithmétique des longueurs de ces fibres.

On appelle « film » une feuille, généralement souple, d'une épaisseur inférieure à 1 mm.

On appelle « plaque rigide » une feuille d'une épaisseur supérieure à 1 mm.

Sauf mention contraire, dans toute la description, les pourcentages mentionnés sont des pourcentages massiques.

Sauf indication contraire, par « comportant » ou « comprenant », on comprend « comportant au moins ».

### Description détaillée d'un mode de réalisation

Un matériau selon l'invention peut être fabriqué suivant les étapes a) à e) précédemment mentionnées.

A l'étape a), les pailles de chanvre et de lin utilisées peuvent provenir de l'agriculture biologique, c'est-à-dire de cultures utilisant peu ou pas d'intrant de traitements phytosanitaires, d'insecticides, voire pas de produit chimique. Elles peuvent en particulier être dépourvues de traces de pesticide.

La paille de chanvre peut notamment n'avoir subi aucun traitement, et donc être dépourvue de traces de pesticide, ce qui avantageusement limite de potentiels risques allergéniques pour l'utilisateur final. L'absence de traitement évite également toute dégradation des propriétés du matériau.

A l'étape b), le défibrage de la paille de chanvre et/ou de lin peut être mécanique ou chimique. Le défibrage consiste en un broyage et une séparation des parties rigides (anas de lin et chènevottes), de la partie fibreuse ainsi que des particules pouvant être assimilées à de la poussière.

Le défibrage de la paille de chanvre permet classiquement d'obtenir, à l'issue de l'étape b), entre 20 et 25 % de fibres de chanvre, entre 55 et 60 % de chènevottes et entre 15 et 20 % de poussière, en pourcentages en masse par rapport à la masse totale de la paille de chanvre.

Le défibrage de la paille de chanvre peut être plus ou moins grossier selon la teneur en fibres de chanvre finale désirée dans un matériau conforme à l'invention. Ainsi, à l'issue de l'étape b), on peut sélectionner pour l'étape c) un mélange fibreux de chanvre dit « de qualité papetière », consistant en un mélange de fibres de chanvre et de chènevottes, la teneur en chènevottes étant comprise entre 10 et 60 % en masse du mélange.

On peut également sélectionner, à l'issue de l'étape b), un mélange fibreux de chanvre dit « de qualité technique », c'est-à-dire un mélange de fibres de chanvre et de chènevottes au sein duquel la teneur en chènevottes est inférieure à 10 % en masse du mélange.

Le défibrage de la paille de lin permet d'obtenir, à l'issue de l'étape b), entre 15 et 40 % de fibres de lin, entre 30% et 70% d'anas de lin et entre 10 et 40% de poussières, en pourcentage en masse par rapport à la masse totale de la paille de lin traitée.

Selon un mode de réalisation préféré, seules les fibres de chanvre et les fibres de lin sont conservées à l'issue de l'étape b) pour la fabrication d'un matériau selon l'invention.

A l'étape c), on procède au nappage des fibres de lin et des fibres de chanvre, de préférence par nappage pneumatique, par exemple du type « airlay ». Pour ce faire, les fibres de chanvre (ou ledit mélange fibreux de qualité papetière ou ledit mélange fibreux de qualité technique) et les fibres de lin obtenues à l'issue de l'étape b) sont mélangées et mixées pour obtenir un mélange le plus intime et homogène possible.

Optionnellement, un agent liant, par exemple des fibres polyester, peut être incorporé audit mélange.

Le mélange ainsi constitué est introduit dans un « nappeur », qui permet de transformer ledit mélange en un nappé présentant une épaisseur et une densité adaptées à l'utilisation à laquelle le nappé est destiné.

Les teneurs en fibres de lin, en fibres de chanvre (ou en mélange fibreux de qualité papetière ou en mélange fibreux de qualité technique) et éventuellement en agent liant sont ajustées de manière à obtenir, à l'issue de l'étape c), un matériau conforme à l'invention.

A l'étape d), le liage peut être effectué par passage du nappé dans un four à air chaud.

L'agent liant éventuellement présent dans le mélange de fibres fond sous l'action de la chaleur, apportant ainsi des points de collage, répartis de manière sensiblement homogène, entre les fibres de lin et les fibres de chanvre (thermoliage). Avantageusement, la présence d'un agent liant permet d'augmenter la tenue mécanique du matériau.

L'ajout d'un agent liant peut également être remplacé et/ou complété par un liage mécanique, par exemple par aiguilletage.

Le nappé obtenu à l'issue de l'étape c) ou d) est ensuite mis en forme : il peut être coupé de manière à former des panneaux.

Il peut également être coupé puis enroulé de manière à former des rouleaux.

Le procédé de fabrication d'un matériau isolant conforme à l'invention peut comporter une étape e) optionnelle, au cours de laquelle le matériau obtenu à l'issue de l'étape c) ou d) est revêtu, au moins partiellement, notamment sur au moins une grande face dudit matériau, voire sur les deux grandes faces dudit matériau, d'un film, de préférence choisi parmi un film non tissé, un film étanche à la vapeur d'eau, un film composite, par exemple un film en papier kraft et aluminium.

Un tel film peut avantageusement apporter des spécificités techniques supplémentaires au matériau selon l'invention ou contribuer à améliorer celles qu'il possède déjà, par exemple la résistance au feu, la résistance à l'humidité, l'isolation thermique et/ou acoustique, la performance mécanique (résistance à un effort de traction, de cisaillement et/ou de compression).

Un procédé de fabrication conforme à l'invention peut encore comporter une étape f) optionnelle, au cours de laquelle le matériau selon l'invention obtenu à l'issue de l'étape c),d) ou e) est lié, notamment par collage, soudage à chaud, ultra-sons, couture ou toute autre méthode adaptée, à au moins une plaque rigide.

La plaque rigide peut notamment présenter une épaisseur supérieure à 5 mm ou supérieure à 10 mm.

L'étape f) peut être répétée de manière à former un article présentant plusieurs couches, notamment une alternance de plaques rigides et de couches en matériau selon l'invention, notamment obtenu à l'issue de l'étape d) et/ou e).

L'étape f) peut avantageusement permettre d'améliorer les performances, par exemple l'efficacité acoustique.

L'ordre des étapes e) et f) peut être inversé.

Selon un mode de réalisation préféré, un matériau conforme à l'invention comprend, en pourcentages en masse par rapport à la masse totale dudit matériau et pour un total de 100 % :
- entre 45 et 50 % de fibres de lin,
- entre 45 et 50 % de fibres de chanvre, et
- entre 0 et 10 % de fibres polyester en tant qu'agent liant.

Des essais ont montré qu'un tel matériau peut présenter les propriétés avantageuses suivantes :

| | |
|---|---|
| Densité | 25 kg_{/m}³ |
| Conductivité thermique (λ) | 0,037 W/m.K |
| Capacité thermique spécifique | 1700 J/kg.K |
| Coefficient de résistance à la vapeur (µ) | 2 |
| Température maximale d'utilisation | 120°C |

On a par ailleurs mesuré la résistance thermique (coefficient R) d'un matériau selon l'invention en fonction de son épaisseur :

| Epaisseur (mm) | Coefficient R (m²K/W) |
|---|---|
| 45 | 1,22 |
| 60 | 1,62 |
| 80 | 2,16 |
| 100 | 2,70 |
| 120 | 3,24 |
| 140 | 3,78 |
| 160 | 4,32 |
| 200 | 5,40 |

Comme l'on peut voir d'après ces résultats, un matériau selon l'invention présente d'excellentes propriétés d'isolation thermique. D'autres essais ont également démontré une bonne résistance à l'humidité, même pour de faibles épaisseurs, et l'absence d'affaissement avec le temps, en particulier dans un environnement humide. Les propriétés avantageuses se maintiennent donc dans le temps.

De plus, un matériau selon l'invention offre un déphasage (temps que met la chaleur pour traverser une épaisseur donnée du matériau) avantageusement long : ainsi, un tel matériau peut être mis en oeuvre pour isoler une habitation par exemple, notamment une chambre à coucher, car il est capable d'emmagasiner la chaleur pendant la journée et de la restituer pendant la nuit.

Comme il apparaît clairement à présent, un matériau selon l'invention présente des performances en termes de résistance à l'humidité, de résistance thermique et de longévité qui le rendent particulièrement avantageux pour une utilisation comme matériau d'isolation.

Bien entendu la présente invention n'est pas limitée aux modes de réalisation décrits, fournis à titre d'exemples illustratifs et non limitatifs.

## Revendications

1. Matériau isolant thermiquement et acoustiquement comprenant, en pourcentages en masse par rapport à la masse totale dudit matériau, entre 5 et 80 % de fibres de lin présentant une taille moyenne comprise entre 25 et 100 mm et/ou entre 5 et 80 % de fibres de chanvre présentant une taille moyenne comprise entre 25 et 100 mm.

2. Matériau selon la revendication précédente, dans lequel plus de 80 % en nombre des fibres de lin et/ou de chanvre présentent une taille comprise dans une plage d'une largeur inférieure à 10 mm.

3. Matériau selon la revendication précédente, dans lequel plus de 80 % en nombre des fibres de lin et/ou de chanvre présentent une taille comprise dans une plage d'une largeur inférieure à 5 mm.

4. Matériau selon l'une quelconque des revendications précédentes, comprenant entre 30 et 50 % de fibres de lin et entre 30 et 50 % de fibres de chanvre, en pourcentages en masse par rapport à la masse totale dudit matériau.

5. Matériau selon l'une quelconque des revendications précédentes, dans lequel les fibres de lin présentent une taille moyenne comprise entre 25 et 100 mm et les fibres de chanvre présentent une taille moyenne comprise entre 25 et 100 mm.

6. Matériau selon l'une quelconque des revendications précédentes, dans lequel les fibres de lin présentent une taille moyenne comprise entre 25 et 60 mm et les fibres de chanvre présentent une taille moyenne comprise entre 25 et 60 mm.

7. Matériau selon l'une quelconque des revendications précédentes, dans lequel les fibres de lin présentent une taille moyenne comprise entre 25 et 35 mm et/ou les fibres de chanvre présentent une taille moyenne comprise entre 25 et 35 mm.

8. Matériau selon l'une quelconque des revendications précédentes, dans lequel les fibres de lin présentent une taille moyenne comprise entre 25 et 35 mm et les fibres de chanvre présentent une taille moyenne comprise entre 25 et 35 mm.

9. Matériau selon l'une quelconque des revendications précédentes, comprenant entre 5% et 25% de chènevottes de lin et/ou de chanvre, en pourcentages en masse par rapport à la masse totale dudit matériau.

10. Matériau selon l'une quelconque des revendications précédentes, comprenant un agent liant présentant une température de fusion inférieure à 200°C et supérieure à 100°C, ledit agent liant étant présent en une teneur comprise entre 2% et 50 %, en pourcentages en masse par rapport à la masse totale dudit matériau.

11. Matériau selon l'une quelconque des revendications précédentes, comprenant un agent liant présentant une température de fusion inférieure à 200°C et supérieure à 100°C, ledit agent liant étant présent en une teneur comprise entre 2% et 15 %, en pourcentages en masse par rapport à la masse totale dudit matériau.

12. Matériau selon l'une quelconque des revendications précédentes, dans lequel les fibres de lin et/ou de chanvre sont sensiblement dépourvues de traces de pesticide.

13. Matériau selon l'une quelconque des revendications précédentes, dans lequel les fibres de lin, les fibres de chanvre, l'agent liant optionnel, et les chènevottes optionnelles représentent ensemble plus de 90 % de la masse totale du matériau.

14. Article comportant une couche en un matériau selon l'une quelconque des revendications précédentes, ladite couche étant fixée sur une plaque rigide présentant une épaisseur supérieure à 5 mm.

15. Utilisation d'un matériau selon l'une quelconque des revendications 1 à 13, pour l'isolation thermique et/ou acoustique.
